# EUROPEAN PATENT APPLICATION

(11) **EP 4 830 999 A1**
(43) Date of publication of application: **28.10.2026**
(21) Application number: 26165318.2
(22) Date of filing: 17.03.2026
(51) Int. Cl.: B60N 2/75, A24B 1/00, B60N 2/02, B60N 2/005

(54) **ADJUSTABLE TWO-PART ARMREST**

(30) Priority: 23.04.2025 GB 202506075
(71) Applicant: AGCO International GmbH, 8212 Neuhausen am Rheinfall (CH)
(72) Inventor: STALLMEIER, Dirk, 87616 Marktoberdorf (DE)
(74) Representative: AGCO Intellectual Property Department

(57) **Abstract**

An operator station for a work vehicle (2) which comprises a two-part armrest (24) parted in a first part (24a) and a second part (24b) with the first part (24a) being rotatable about a first rotation axis (21) and the second part (24b) being moveable relatively to the first part (24a) in dependence of the rotation of the first part (24a) about the first rotation axis (21).

## Description

### FIELD

The present disclosure relates generally to an adjustable armrest of an agricultural vehicle.

### BACKGROUND

U. S. Patent 9,707,865 B1, "Operator Seat Swivel with Arm Release", filed on May 4 2016, discloses an operator seat for a work vehicle wherein the seat includes an operator support and an arm coupled to the operator support with a hinge to cause a pivotal movement of the arm in first direction when the operator support is rotated in a second direction opposite of the first direction.

### BRIEF SUMMARY

The maximum allowed rotation range of seats in work vehicles, such as tractors or harvesters, is limited to prevent the seat or attached components from colliding with other parts within the cabin of the work vehicle. While collisions within the cabin are prevented, the range of movement of the seat is limited and accordingly the movement of the operator within the cabin is also limited. Therefore, it would be beneficial if the freedom of movement of the operator within the cabin could be increased.

According to an aspect of the invention, an operator station for a work vehicle is provided which comprises a two-part armrest parted into a first part and a second part. The first part of the armrest is rotatable about a first rotation axis and the second part of the armrest is moveable relatively to the first part of the two-part armrest in dependence of the rotation of the first part about the first rotation axis.

The work vehicle may be an agricultural machine of any type such as a tractor, a harvester, a combine, a sprayer or any other type of vehicle or vehicle-implement combination.

The two-part armrest may be used to support an operator by increasing his comfort level by offering a place to rest his arms. The first part of the two-part armrest may preferably function as a main support portion for the arm and/or the elbow of the operator. The first part of the two-part armrest may comprise some control elements. The second part of the two-part armrest may serve as a support portion for the hand and may comprise control elements such as a human machine interface like a display, a joystick, buttons, switches and more to provide the operator easy to reach control options.

Since the first part of the two-part armrest is rotatable about a first rotation axis, the second part may be able to support the operator both in a forward-facing position of the operator aligned with a longitudinal direction of the work vehicle and in a rotated position in respect to the longitudinal direction. With the second part of the two-part armrest being additionally moveable relatively to the first part of the two-part armrest in dependence of the rotation of the first part about the first rotation axis, the collision free rotation range of the two-part armrest may be increased further, and support could be offered to the operator over a wider range. Accordingly, the range of movement of the two-part armrest may be increased and therefore also the freedom of movement and the comfort of the operator since the operator could move more freely with the two-part armrest in a wider area without risking a collision between the two-part armrest and a potential obstacle.

The second part of the two-part armrest may be moveable relative to the first part of the two-part armrest by being rotatable about a second rotation axis which is different to the first rotation axis.

The first and second rotation axis may be vertical in relation to a longitudinal direction of the work vehicle which may be parallel to the ground on which the work vehicle may be located.

The freedom of movement of the operator would be increased if the second part of the two-part armrest is rotatable relative to the first part of the two-part armrest about a second rotation axis. Hence, additional degrees of movement may be available in which the seat can be rotated without the two-part armrest colliding with an obstacle.

A connection element may connect the first part and the second part of the two-part armrest. The connection element may be formed as a single column or may comprise more than one column to enable rotation of the second part of the two-part armrest about at least one second rotation axis. The connection element may be rotatably connected to the first part of the two-part armrest as well as to the second part of the two-part armrest. The connection element may be formed as single rigid column, or it may alternatively comprise at least two interacting elements which are connected to each other, and which may be moveable in relation to each other. This movement may be in form of a telescopically adjustment or the at least two elements may rotate in relation to each other about a common rotation axis of the connection element.

The adjustment of the connection element may be done either manually by the operator or automatically. An adjustment of the connection element may increase comfort of the operator by enabling them to position the second part of the two-part armrest in a distance which would suit him best.

The second part of the armrest may be moveable in relation to the first part of the armrest by being slidable along a path.

The path may be defined by a rail or an indentation attached or part of the first part of the two-part armrest to which the second part of the two-part armrest may be connected.

The connection element connecting the first part and the second part of the two-part armrest may be formed as a corresponding counterpart for the path, e.g. in form of a slider, to enable movement of the second part of the two-part armrest along the path. This would increase the range of movement of the two-part armrest and accordingly also the freedom of the operator by providing an option for the second part of the two-part armrest to be moved to not collide with a potential obstacle. Additionally, the second part of the two-part armrest may be positioned in a location which suits the operator most. Furthermore, the usage of a path may allow the installation of additional elements which can be moved along the path similar to the second part of the two-part armrest.

The operator station for the work vehicle may comprise a rotatable seat which may be rotatable about the first rotation axis and may comprise a rotation range which may define the rotation range in which the seat can be rotated without any part of the rotatable seat or the two-part armrest colliding with an obstacle.

The rotation range of the rotatable seat may be dependent on the circumstances and the environment of the operator station and may be accordingly adjustable. The rotation range may extend to either side of the rotatable seat and may allow a clockwise and a counterclockwise rotation. An obstacle within the cabin may be other components within the operator station, for example a display, walls of the operator station, or a steering wheel.

The two-part armrest may be arranged at either side of the rotatable seat. It may even be possible that two two-part armrests are arranged with one two-part armrest on each side of the rotatable seat. The two-part armrest may be moveable from one side to the other to provide an operator an ideal work environment regardless of whether the operator is left-handed or right-handed. The movement of the two-part armrest from one side to the other may take place by unplugging the two-part armrest from a plug-in slot on the first side and plugging it into a corresponding plug-in slot on the other side.

The integration of a rotatable seat may increase the comfort of the operator as well as his freedom of movement and provide an easier way to enter the vehicle by rotating the rotatable seat towards a door of the operator station. The rotatable seat may also be able to rotate 180° degrees to a rearward facing position for those scenarios in which the operator may require a better view on a potential implement attached to the rear of the work vehicle or to assist in rearward driving.

The operator station may comprise an adjustable steering wheel which may be moveable between an operating position and a parking position, wherein the rotation range of the rotatable seat with the two-part armrest may be greater when the steering wheel is in the parking position rather than in the operating position.

The steering wheel may be used to control the driving direction of the work vehicle when the steering wheel is in the operating position. In the operating position, the steering wheel may be positioned generally in front of the operator in regard to the standard orientation of the rotatable seat aligned with a longitudinal axis of the work vehicle in a forward direction. The steering wheel may be adjustable in the operating position according to the needs of the operator.

The steering wheel may be switched into the parking position manually or automatically by moving the steering wheel in a position close to the front window of the operator station. The parking position close to the front window of the operator station may enable the operator to leave the operator station more easily by being able to rotate the rotatable seat further towards the door of the operator station. Accordingly, the operator may enter or leave the operator station more easily which increases the comfort of the operator as well as reducing the risk of potential damages by colliding with the steering wheel while entering or leaving the operator station.

Furthermore, the rotation range of the rotatable seat may be increased while the steering wheel is within the parking position which would enable the operator to move more freely within the operator station.

The steering wheel may be moved between the parking position and the operating position mechanically, pneumatically, hydraulically or electronically by tilting about a horizontal axis and longitudinal adjustment along a steering column which couples the steering wheel to the work vehicle.

The position of the rotatable seat may be adjustable in a longitudinal direction of the work vehicle. The rotation range of the rotatable seat with the two-part armrest may be dependent on the longitudinal position of the rotatable seat.

The rotatable seats of work vehicles may be adjustable to accommodate a wide range of different operators. Depending on the height of the operators, certain positions of a rotatable seat may be more comfortable than others. A tall operator may prefer a more backwards position, so his arms and legs are not cramped as in a more forward position. A short operator on the other hand might have trouble to reach the steering wheel or other control elements if the rotatable seat is in a backwards position. The longitudinal position of the rotatable seat may be adjusted manually or automatically.

However, an adjustment of the rotatable seat in a longitudinal direction may have an impact on the rotation range since the rotatable seat may be moved in relation to the other components and obstacles within the operator station. Accordingly, a rotation of 25° in a forward position might be possible without any issue while a rotation of 25° in a backward position may result in a collision with an obstacle. Therefore, it may be necessary to adjust the rotation range of the rotatable seat in dependence of the longitudinal position of the rotatable seat to provide the operator with as much freedom of movement as possible while preventing any potential collisions.

The movement of the second part of the two-part armrest in relation to the first part of the two-part armrest may be in dependence of the rotation of the rotatable seat.

The rotatable seat and the two-part armrest may be linked in such a manner that a movement of the rotatable seat is transferred onto the two-part armrest to induce a movement on the second part of the two-part armrest in relation to the first part of the two-part armrest. Therefore, this may enable the operator to operate the work vehicle in a smooth manner without interrupting the work to adjust the second part of the two-part armrest when the operator wants to rotate the rotatable seat.

The second part of the two-part armrest may be configured to move in a direction different to the rotation of the rotatable seat when the rotatable seat is rotated.

While in some scenarios it might be preferrable to rotate the two-part armrest and the rotatable seat in the same direction, this may change when a collision with an obstacle needs to be prevented. In this case it may be more beneficial when the second part of the two-part armrest is configured to move in a direction which is different to the direction of rotation of the rotatable seat. In one example in which the rotatable seat may be turned 180° into a backward facing position, it might be beneficial to rotate the second part of the two-part armrest about a horizontal axis to change the vertical position of the second part of the two-part armrest. If the second part of the two-part armrest is rotated about a horizontal axis located within the first part of the two-part armrest, then the second part may be positioned at a higher position than the first part of the two-part armrest which might enable the rotatable seat to rotate to the backward facing position without any collision between the second part of the two-part armrest and a potential obstacle within the operator station. Once the rotatable seat has reached its preferred orientation, the second part of the two-part armrest could be rotated into the starting position which is aligned with the first part of the two-part armrest so the operator could continue to operate the work vehicle. This might greatly enhance the freedom of movement of the operator within the operator station by providing a diverse range of adjustment possibilities.

The rotation of the two-part armrest in a different direction to the rotation of the rotatable seat may be contrary to the direction of rotation of the rotatable seat.

While the contrary movement may be in the same plane of movement as the rotation of the rotatable seat, the second part of the two-part armrest may also be moved in relation to the first part of the two-part armrest in a different plane of movement. The second part of the two-part armrest may be moved in more than one plane in relation to the first part of the two-part armrest.

Accordingly, if the rotatable seat is rotated in a counterclockwise direction, the second part of the two-part armrest may be moved gradually in a clockwise direction to prevent a potential collision with the steering wheel.

Such a contrary movement may provide an improved rotation range while simultaneously guarantee that the second part of the two-part armrest is always in a position which is useable by the operator of the work vehicle. This may be especially important when the work vehicle may currently be in motion since not having access to potential control elements may lead to unwanted accidents.

The operator station may further comprise a control unit to control a first actuator which may be configured to move the second part of the two-part armrest.

Depending on the type of the first actuator, the second part of the two-part armrest may be moved pneumatically, hydraulically, electronically, or mechanically. Hence, the second part of the two-part armrest may be moved automatically.

Utilising a control unit to actuate a first actuator to adjust the second part of the two-part armrest might enable the operator to move the second part of the two-part armrest into the exact position every single time which might not be the case with manual adjustment. This might result in smooth work flows for the operator so the operator may rely on having the second part of the two-part armrest in the preferred position so the operator may focus on operating the work vehicle.

The movement of the second part of the two-part armrest may be dependable on the movement of the rotatable seat in accordance with a proportional relationship which may include a proportionality factor which may be adjustable by the control unit.

A high proportionality factor of the proportional relationship may translate a small movement of the rotatable seat in a counterclockwise direction into a larger movement of the second part of the two-part armrest in a counterclockwise direction in relation to the first part of the two-part armrest. Accordingly, a small proportionality factor may translate a small movement of the rotatable seat in a counterclockwise direction into a small movement of the second part of the two-part armrest in a counterclockwise direction in relation to the first part of the two-part armrest. A high proportionality factor may translate a small movement of the rotatable seat in a clockwise direction into a larger movement of the second part of the two-part armrest in a clockwise direction in relation to the first part of the two-part armrest. A small proportionality factor may translate a small movement of the rotatable seat in a clockwise direction into a small movement of the second part of the two-part armrest in a clockwise direction in relation to the first part of the two-part armrest. Analogue, a high negative proportionality factor may translate a small movement of the rotatable seat in a counterclockwise direction into a larger movement of the second part of the two-part armrest in a clockwise direction in relation to the first part of the two-part armrest. A small negative proportionality factor may translate a small movement of the rotatable seat in a counterclockwise direction into a small movement of the second part of the two-part armrest in a clockwise direction in relation to the first part of the two-part armrest. A high negative proportionality factor may translate a small movement of the rotatable seat in a clockwise direction into a larger movement of the second part of the two-part armrest in a counterclockwise direction in relation to the first part of the two-part armrest. A small negative proportionality factor may translate a small movement of the rotatable seat in a clockwise direction into a small movement of the second part of the two-part armrest in a counterclockwise direction in relation to the first part of the two-part armrest. A proportionality factor of zero may not translate a movement of the rotatable seat into an extra movement of the second part of the two-part armrest. Instead, the second part of the two-part armrest may remain aligned with the first part of the two-part armrest. The proportionality factor may be adjusted either automatically or manually by input of the operator. The operator may adjust the proportionality factor by changing a number in a human machine interface for example with a rotatable button.

The proportionality factor may depend on the current position of the rotatable seat and the two-part armrest. When the rotatable seat faces the standard position aligned with the longitudinal axis of the work vehicle then the proportionality factor may be zero. The proportionality factor may remain at the same level for a certain range and may be adjusted when the rotation angle of the rotatable seat approaches the maximum rotation angles of the rotation range of the rotatable seat at either side. The adjustment of the proportionality factor may be a reduction when the rotatable seat approaches the maximum rotation angles of the rotation range of the rotatable seat at either side so the second part of the two-part armrest may be moved in relation to the first part of the two-part armrest in a contrary direction of the rotation direction of the rotatable seat. Alternatively, the adjustment of the proportionality factor may be an increase to move further in the same direction in which the rotatable seat may be rotated.

The proportionality factor may allow the second part of the two-part armrest to be moved for the correct amount by the first actuator in the various situations. A fixed translation of the movement may also be possible, but the second part of the two-part armrest may be moved constantly with every degree of rotation of the rotatable seat. With the adjustable proportionality factor, the second part of the two-part armrest may remain aligned with the first part of the two-part armrest for a wider range before the adjustment of the second part of the two-part armrest by the first actuator through the control unit takes place. This way, the operator doesn't have to adjust his view every time the rotatable seat is rotated slightly.

The proportional relationship between the movement of the rotatable seat and the second part of the two-part armrest may be formed mechanically, hydraulically or electronically.

If the movement of the rotatable seat and the second part of the two-part armrest is formed mechanically, then a Bowden cable may be used to establish the proportional relationship between the rotatable seat and the second part of the two-part armrest. The attachment point of the Bowden cable may be adjusted when the proportionality factor is changed. Accordingly, the length of the connection may be changed which may affect the proportional relationship between the rotatable seat and the second part of the two-part armrest. Any other mechanical coupling may also be used provided that the movement of the rotatable seat and the second part of the two-part armrest may be coupled. When establishing the proportional relationship hydraulically, at least two hydraulic cylinders may be used which are connected through a flexible tube which may be filled with a hydraulic fluid. Movement of the rotatable seat may lead to a displacement of the hydraulic fluid which correspondingly results in a movement of the second part of the two-part armrest. The proportional factor of the proportional relationship between the rotatable seat and the second part of the two-part armrest may be adjusted by usage of at least one additional hydraulic cylinder which may be coupled to the at least two hydraulic cylinders. If the proportional relationship is established electrically, then a sensor might be used to detect a rotation of the rotatable seat. A sensor signal may be sent out to the control unit which actuates an actuator to move the second part of the two-part armrest. The actuation of the actuator may be dependent on the proportional relationship between the movement of the rotatable seat and the movement of the second part of the two-part armrest. The proportional relationship may be set by the control unit by adjusting the proportional factor. Accordingly, when the sensor may detect a small rotation of the rotatable seat in in a clockwise direction and the proportional factor of the proportional relationship may currently be set to be negative by the control unit, then the control unit may control the actuator to move the second part of the two-part armrest with a large movement in a counterclockwise direction. If the proportional factor is only slightly negative, then the control unit may control the actuator to move the second part of the two-part armrest only slightly in a counterclockwise direction in response to the small movement of the rotatable seat in a clockwise direction.

The operator station for the work vehicle may comprise a sensor system, wherein the control unit may be configured to receive a signal from the sensor system and to determine the proportionality factor to prevent a collision between the second part of the two-part armrest and an obstacle based on the signal.

Depending on the signal of the sensor system, the control unit may control the mechanical, hydraulic or electric actuator to decrease or increase the proportionality factor or keep it on the current level.

The sensor system may comprise a proximity sensor which may be configured to detect any obstacle within a sensor area of the proximity sensor. The control unit may be configured to adjust the proportionality factor of the proportional relationship of the second part of the two-part armrest based on the detection of any obstacle within the sensor area to prevent a collision between the second part of the two-part armrest and the obstacle.

By preventing a potential collision between the second part of the two-part armrest and an obstacle, the rotation range of the rotatable seat could be maximized.

The sensor system may be configured by the control unit to surround the second part of the two-part armrest with the sensor area to detect any obstacles in the proximity. When the second part of the two-part armrest is moved, the sensor system may be configured to adjust the sensor area accordingly so the sensor area may continue to surround the second part of the two-part armrest. The sensor area may be configured to extend further than the second part of the two-part armrest to detect any obstacle before it may come into contact with the second part of the two-part armrest. The proximity sensor may either be arranged at the second part of the two-part armrest so that the sensor area may move together with the second part of the two-part armrest, or the proximity sensor may be arranged with a distance to the second part of the two-part armrest and the sensor area may be constantly adjusted when the second part of the two-part armrest is being moved.

The sensor system may comprise a visual sensor, such as a camera, or any other suitable sensor which could be used to detect an obstacle.

The control unit may be configured to control a second actuator to adjust the rotation range of the rotatable seat.

By adjusting the rotation range of the rotatable seat, the control unit may prevent collisions by reducing the rotation range of the rotatable seat. This might be the case when the longitudinal position of the rotatable seat may be changed in a backward position. The rotation range may be increased when the longitudinal position of the rotatable seat is changed into a forward position. This might increase the freedom of movement of the operator and the rotatable seat since the rotatable seat may be rotated further than in a backward position. The rotation range may be adjusted when the steering wheel is switched between the operating position and the parking position. A sensor may be used to detect the current position of the steering wheel, and the control unit may use the sensor data provided by the sensor to adjust the rotation range of the rotatable seat accordingly. By adjusting the rotation range, the control unit may ensure that the operator is provided a collision free range of movement at any situation.

The second actuator may adjust a stopping mechanism to limit the rotation range of the rotatable seat in either direction of the first rotation axis.

To adjust the rotation range of the rotatable seat the second actuator may move at least one adjustable stop which blocks the rotatable seat from rotating further. By moving at least one adjustable stop a collision between the two-part armrest and any potential obstacle may be prevented which may also prevent wear and tear of the colliding components or any other damages.

The second actuator may be configured to rotate the rotatable seat about the first rotation axis. The rotatable range may be limited by the extend of actuation of the second actuator.

The second actuator may limit the maximum allowed rotation range of the rotatable seat mechanically, pneumatically, hydraulically or electronically.

The second actuator may exercise a counter force against a rotation of the rotatable seat initiated by the operator to prevent the rotatable seat to overextend the maximum allowed rotation range.

A mechanical limitation may be in form of a moveable stop. A pneumatical or hydraulic limitation may be in form of a cylinder which is filled with a pneumatic gas or a hydraulic fluid which functions as a damper. When the rotatable seat may be rotated, then a compression of the hydraulic fluid or the pneumatic gas may be created which results in a counterforce since the hydraulic fluid or pneumatic gas can only be compressed to a certain extend. With the increasing counterforce, the rotation of the rotatable seat may become more difficult first before the counterforce may become too strong and the rotation may be stopped. The second actuator may limit the rotation range electronically by limiting the extent to which the rotatable seat may be rotated. This may be done by exercising a counter torque against the rotation for example through an electronic motor which may counteract the rotational force of the rotatable seat. The second actuator may induce a current into a magnetorheological device which may act as an electrically controllable dampener to slow down the rotation of the rotatable seat and then stop it.

The proportionality factor of the second part of the two-part armrest may be adjusted by the control unit either based on the current situation or according to pre-defined scenarios. The pre-defined scenarios may be provided by the manufacturer of the work vehicle or set up by the operator beforehand. The pre-defined scenarios may provide a set of rules to increase or decrease the proportionality factor at certain degrees of rotation. The pre-defined scenarios may be adjustable by the operator or by the control unit once they have been created. These adjustments may be done due to the preferences of the operator and or to include changing circumstances like the current position of the rotatable seat and the two-part armrest. Changes in the operator station may also be included in the adjustment of the pre-defined scenarios. For example, the integration of a display at one of the pillars or walls of the operator station may be defined as a known obstacle and integrated in the pre-defined scenario.

The usage of pre-defined scenarios may provide an improved freedom of movement for the operator and the rotatable seat by being configured to ensure a collision free movement and being further configured to provide optimal accessibility to the second part of the two-part armrest for the operator.

The control unit may also consider additional environmental factors like the size of the cabin, the integration of components within the operator station as well as the location of such components to determine and limit the rotation range of the rotatable seat.

The control unit may consider the vertical position of the rotatable seat to adjust the rotation range of the rotatable seat accordingly. A rotatable seat in a lower position may collide with an obstacle while a rotatable seat in a higher position could rotate above the obstacle or the opposite might be the case. By taking the vertical position into account, the control unit may be able to determine and limit the rotatable range of the rotatable seat more precisely.

The two-part armrest may be configured to decouple from the rotatable seat to not rotate any further when the rotatable seat is rotated. Decoupling the two-part armrest from the rotatable seat may enable extra movement range for the rotatable seat while avoiding potential collisions between the two-part armrest and a potential obstacle. The decoupled two-part armrest may remain motionless within the operator station while the rotatable seat is rotated further. The operator may find it difficult to use the two-part armrest in the decoupled state due to the wide angle between the rotatable seat and the two-part armrest. However, extra range of movement may be provided to the operator by enabling further rotation of the rotatable seat. This decoupling may be used to make it easier for an operator to exit or enter the operator station by enabling rotation of the rotatable seat towards the door of the operator station. When the rotatable seat may be rotated back into an allowed rotation range for the two-part armrest, then the two-part armrest and the rotatable seat may be coupled again to rotate together.

The rotatable seat in this configuration may be able to rotate for at least 180° in a clockwise and / or a counterclockwise direction.

The rotatable seat in this configuration may be able to rotate for at least 90° in a clockwise and / or a counterclockwise direction.

The rotatable seat in this configuration may be able to rotate for at least 45° in a clockwise and / or a counterclockwise direction.

### BRIEF DESCRIPTION OF THE DRAWINGS

Several aspects of the invention will now be described, by way of example only, with reference to the accompanying drawings, in which:
FIG. 1 illustrates an agricultural machine.
FIG. 2 illustrates a control unit.
FIG. 3 illustrates a simplified top view of an operator station including a rotatable seat and a two-part armrest.
FIG. 4a-d illustrate examples of rotations of the rotatable seat and the second part of the two-part armrest.
FIG. 5a-b illustrate an example movement of the second part of the two-part armrest comprising a proximity sensor.
FIG. 6a-b illustrate an example movement of a rotatable seat while the steering wheel is in the parking position.
FIG. 7a illustrates a rotation range of the rotatable seat while the steering wheel is in the operating position and the rotatable seat is in a medium longitudinal position.
FIG. 7b illustrates the rotation range of the rotatable seat while the steering wheel is in the parking position and the rotatable seat is in a medium longitudinal position.
FIG. 8a illustrates the rotation range of the rotatable seat while the steering wheel is in the operating position and the rotatable seat is in a backwards position.
FIG. 8b illustrates the rotation range of the rotatable seat while the steering wheel is in the parking position and the rotatable seat is in a backwards position.
FIG. 9a illustrates motion graphs which display the proportional relationship of movement between the second part of the two-part armrest and the rotation angle of the rotatable seat.
FIG. 9b illustrates a graph which illustrates the adjustments of the proportionality factor for one of the motion graphs.
FIG. 10 illustrates a flowchart diagram for the control unit.

### DETAILED DESCRIPTION

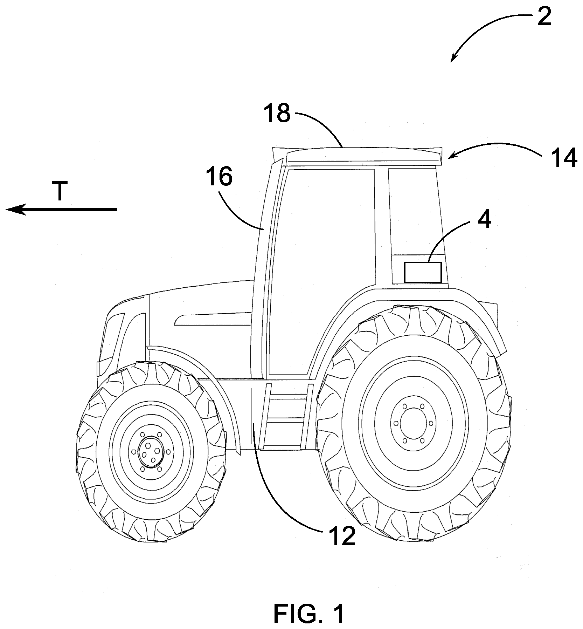

FIG. 1 illustrates a work vehicle in form of an agricultural machine 2. The agricultural machine 2 may be a vehicle or a vehicle-implement combination. The vehicle may generate a tractive force to tow the implement through the agricultural field. The implement may be fixed to the vehicle or detachably connected with the vehicle. The agricultural machine 2 may be an agricultural vehicle such as a tractor, a harvester, a combine, a sprayer or of any other type such as a truck. The implement may be used for an operation in the agricultural field and may be of the type of a plough, a rake, a planter, a sprayer, a mower, a trailer, etc. Depending on the type of the implement, the implement may comprise one or more tools such as a rake rotor, a mower knife, a seeding unit, a spray nozzle, a shovel, a dumper, and other known implements, which are commonly used in combination with an agricultural vehicle. The agricultural machine 2 comprises a chassis 12 and a cabin 14 attached to the chassis 12. The cabin 14 comprises pillars 16 and a roof 18 on top of the cabin 14 to surround a space for an operator of the agricultural machine 2. An electronic control unit 4 is integrated in the agricultural machine 2. Arrow T indicates the forward driving direction of the work vehicle 2.

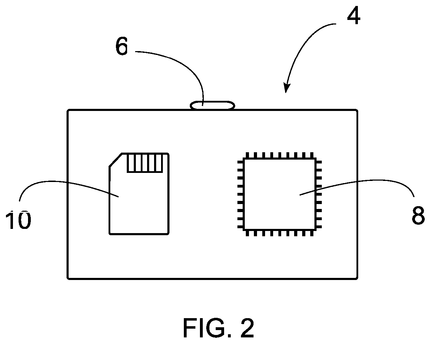

FIG. 2 shows the control unit 4 comprising an I/O interface 6, a controller 8 and a memory 10. The I/O interface 6, the controller 8 and the memory 10 may be attached to a printed circuit board (PCB). The control unit 4 may receive and send signals or data via the I/O interface 6. The I/O interface 6 may be a wireless interface or a connector. The controller 8 may store the data or signals received by the control unit 4 in the memory 10. The memory 10 may contain additional data or executable computer program products, for example in terms of a computer-implemented method, that may be retrieved, processed or executed by the controller 8. Data or signals resulting from the processing of data or signals or from the execution of a computer program product may be stored to the memory 10 or sent to the I/O interface 6 by the controller 8.

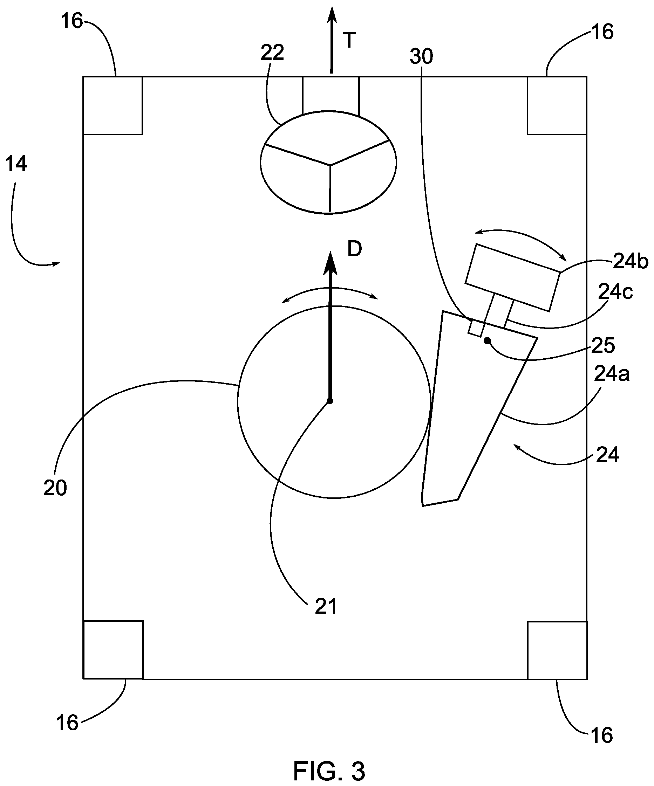

FIG. 3 shows the operator station in the cabin 14 with the pillars 16 from a top view. The operator station comprises a steering wheel 22 which an operator can use to steer the work vehicle 2. The operator station also comprises a seat 20. A current orientation of the seat 20 is indicated by an arrow D which aligns with a forward driving direction of the work vehicle 2 which is indicated by arrow T. The seat 20 is a rotatable seat which is rotatable about a first rotation axis 21 which is vertical. A two-part armrest 24 is coupled to the seat 20. The two-part armrest 24 comprises a first part 24a, a second part 24b and a connection element 24c which couples the second part 24b and the first part 24a with each other. The first part 24a of the two-part armrest 24 provides an area for the operator to rest his arm or elbow while operating the work vehicle 2. The second part 24b of the two-part armrest 24 comprises a human-machine interface (HMI) with control elements and a (touch-sensitive) display. The connection element 24c of the two-part armrest 24 is formed as a telescopically adjustable single column which can rotate about a rotation axis at one end of the column and another rotation axis at the opposite end of the column. Furthermore, the two-part armrest 24 comprises a first actuator 30 which is controlled by the control unit 4 to enable movement of the second part 24b and the connection element 24c about a second rotation axis 25 in relation to the first part 24a of the two-part armrest 24 in dependence of the rotation of the first part 24a about the first rotation axis 21. The first actuator 30 in this example is formed by an electrical motor which can exercise a torque on the connection element 24c to move the connection element 24c and the second part 24b of the two-part armrest 24 about the rotation axis 25 in relation to the first part 24a of the two-part armrest 24.

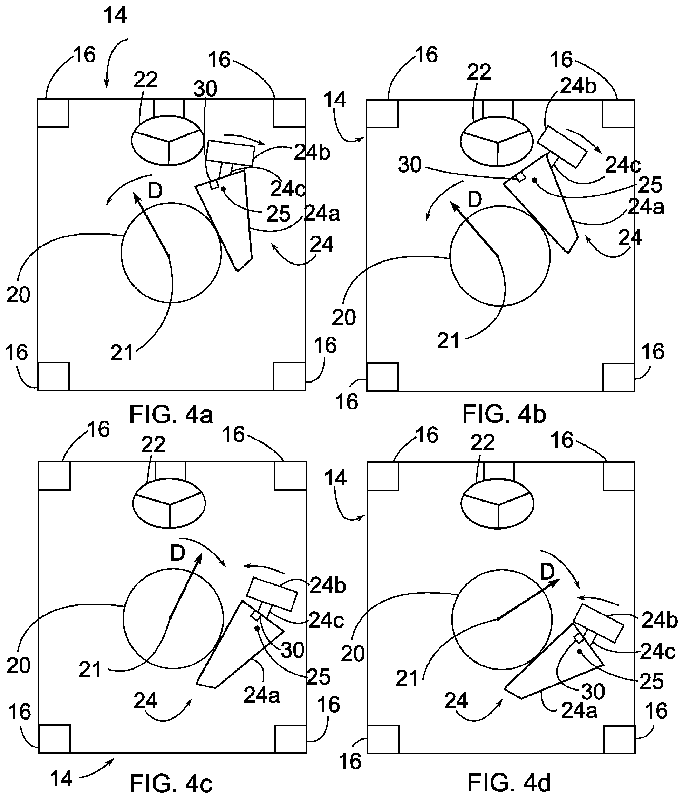

FIG. 4a and FIG. 4b exemplarily illustrate a rotation of the rotatable seat 20 about the first rotation axis 21 in a counterclockwise direction in relation to the forward driving direction, indicated by arrow T in FIG. 1 and FIG. 3, of the work vehicle 2. When the rotatable seat 20 is turned in a counterclockwise direction and the proportionality factor is negative, then the control unit 4 activates the first actuator 30 to rotate the second part 24b of the two part armrest 24 together with the connection element 24c about the second rotation axis 25 in a clockwise direction contrary to the direction of the rotation of the rotatable seat 20. In FIG. 4a the second part 24b is moved by the first actuator 30 slightly in a clockwise direction about the second rotation axis 25 compared to the first part 24a of the two-part armrest 24 due to the rotation of the rotatable seat 20 in a counterclockwise direction about the first rotation axis 21. The movement of the second part 24b of the two-part armrest 24 is dependable on the rotation of the first part 24a of the two-part armrest 24 about the first rotation axis 21. The rotation of the first part 24a of the two-part armrest 24 about the first rotation axis 21 is further dependable on the movement of the rotatable seat 20 in accordance with a proportional relationship. The proportional relationship depends on a proportional factor which is adjustable by the control unit 4. A positive proportional factor defines a ratio to convert a rotation of the rotatable seat 20 into a rotation of the second part 24b of the two-part armrest 24 having the same rotational direction as the rotatable seat 20 (e. g. both rotate in a clockwise direction). Instead, a negative proportional factor defines a ratio to convert a rotation of the rotatable seat 20 into a rotation of the second part 24b of the two-part armrest 24 having a rotational direction being contrary to the rotational direction of the rotatable seat 20 (e. g. rotatable seat 20 rotates clockwise whereas the second part 24b rotates counterclockwise). When the rotatable seat 20 and the two-part armrest 24 are coupled and the proportionality factor is zero, then they rotate together in the same direction while the second part 24b remains the same alignment in relation to the first part 24a of the two-part armrest 24. When the two-part armrest 24 is decoupled from the rotatable seat 20, then the two-part armrest 24 remains at the same position while the rotatable seat 20 is being rotated. In this scenario the proportionality factor of the proportional relationship between the second part 24b and the first part 24a of the two-part armrest 24 is small and negative which translates the large movement of the rotatable seat to a small movement of the second part 24b of the two-part armrest 24. Further rotation in a counterclockwise direction of the rotatable seat 20 leads to the proportionality factor being decreased by the control unit 4 which translates the small movement of the rotatable seat 20 in a counterclockwise direction about the first rotation axis 21 to a large movement of the second part 24b of the two-part armrest 24 in relation to the first part 24a of the two-part armrest 24 in a clockwise direction about the second rotation axis 25.

FIG. 4c and FIG. 4d illustrate an analogue scenario but in this case the rotatable seat 20 is rotated in a clockwise direction about the first rotation axis 21 while the second part 24b of the two-part armrest 24 is rotated in a counterclockwise direction about the second rotation axis 25. The proportionality factor is set by the control unit 4 to be slightly negative in FIG. 4c resulting in small movements of the second part 24b of the two-part armrest 24 in a counterclockwise direction. Then, the proportionality factor is decreased further by the control unit 4 to achieve a larger movement of the second part 24b of the two-part armrest 24 in relation to a small movement of the rotatable seat 20. The second part 24b of the two-part armrest 24 is aligned with the first part 24a of the two-part armrest 24 for a wide rotation portion before the control unit 4 adjusts the proportionality factor to a small negative value to induce a counterclockwise rotation of the second part 24b of the two-part armrest 24 as indicated in FIG. 4c. Since the proportionality factor is only slightly negative, a large clockwise rotation of the rotatable seat 20 is translated only into a small counterclockwise rotation of the second part 24b of the two-part armrest 24. In FIG. 4d, the control unit 4 prevents a collision between the second part 24b of the two-part armrest 24 by decreasing the proportionality factor further to translate a small clockwise rotation of the rotatable seat 20 into a large counterclockwise rotation of the second part 24b of the two-part armrest 24.

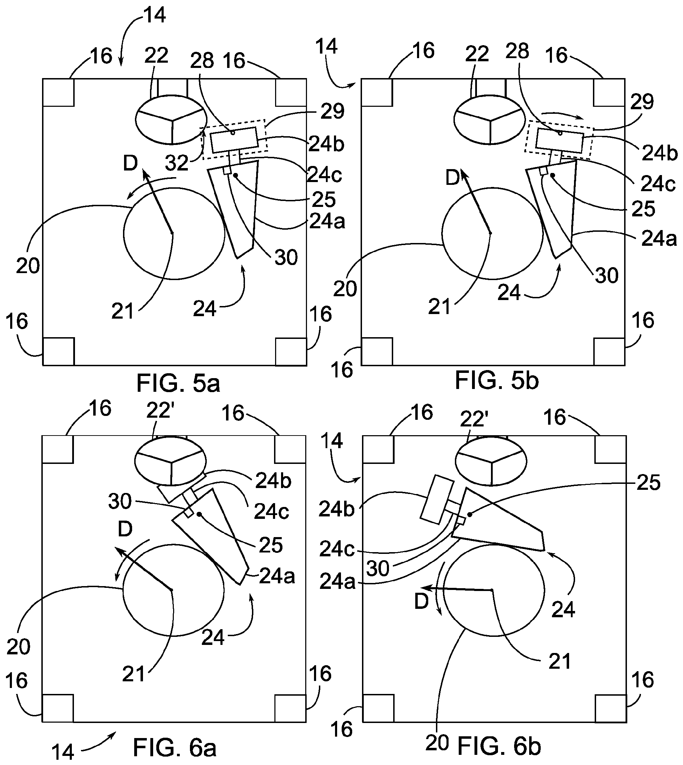

FIG. 5a illustrates a two-part armrest 24 comprising a sensor system 28 including a proximity sensor attached to the second part 24 of the two-part armrest 24. The sensor system 28 is configured to detect any obstacles 32 within a sensor area 29. The sensor area 29 of the sensor system 28 is configured to surround the second part 24b of the two-part armrest 24. FIG. 5a illustrates a scenario in which the steering wheel 22 is detected by the sensor system 28 as an obstacle 32 in the sensor area 29 due to the rotatable seat 20 rotating about the first rotation axis 21 in a counterclockwise direction. Accordingly, the control unit 4 increases the proportionality factor and controls the first actuator 30 to move the second part 24b including the connection element 24c in a clockwise direction about the second rotation axis 25 as shown in FIG. 5b until the sensor area 29 of the sensor system 28 is free of any obstacle 32. The sensor area 29 of the sensor system 28 is continuously adjusted to surround the second part 24b of the two-part armrest 24 corresponding to the movement of the second part 24b of the two-part armrest 24.

As can be seen in FIG. 6a and FIG. 6b, the steering wheel 22 has been moved from the operating position to a parking position close to the front window of the cabin 14. While driving the work vehicle 2, the steering wheel 22 is used by the operator of the work vehicle 2 in the operating position to steer the work vehicle 2. Therefore, the steering wheel 22 in the operating position is positioned at a location which is easily reached by the operator who is sitting in the rotatable seat 20. The steering wheel 22 can be adjusted in a longitudinal direction through telescopic adjustment of a steering column to which the steering wheel 22 is coupled with. Furthermore, the steering wheel 22 may be adjusted by tilting about a horizontal axis of the steering column to move the steering wheel 22 away from the rotatable seat 20 towards the front window of the cabin. When the work vehicle 2 is parked, the steering wheel 22 is typically moved into the parking position to make it easier for the operator to leave or enter the work vehicle 2 without having to squeeze around the steering wheel 22 in the operating position. When moving the steering wheel 22 to the parking position 22', the length of the steering column through the telescopic adjustment may also be adjusted by either increasing or decreasing the length of steering column. In this scenario, the length of the steering column is increased. The steering wheel 22 is also often moved into the parking position 22' when the work vehicle 2 is operated on a field. When this is the case, the operator often prefers to steer the work vehicle 2 with a joystick, which may be located on the two-part armrest 24. Furthermore, while driving in the field, the operator might prefer to utilise autonomous driving capabilities of the work vehicle 2 while still being able to take control of the steering action with the joystick located on the two-part armrest 24. With the steering wheel 22 in the parking position 22', the two-part armrest 24 can be rotated together with the rotatable seat 20 without colliding with the steering wheel 22 due to the second part 24b of the two-part armrest 24 rotating below the steering wheel 22.

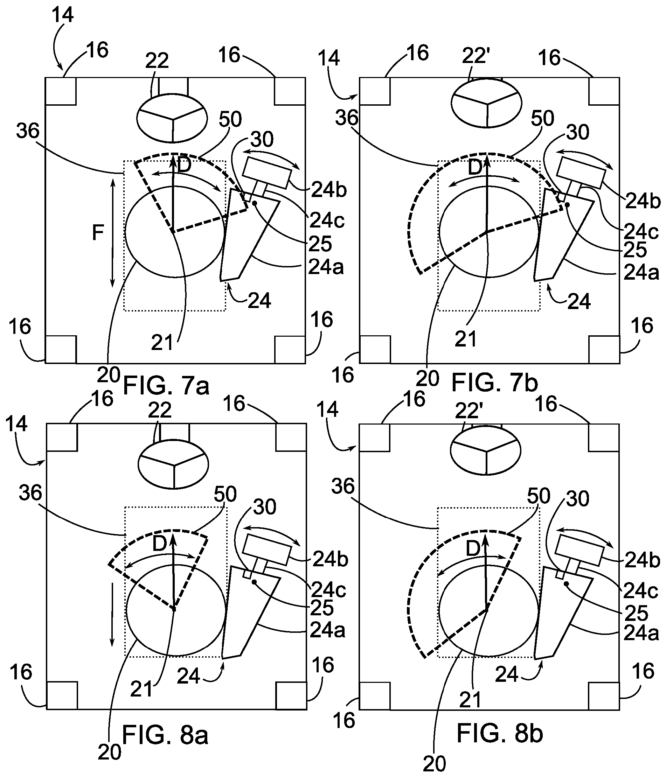

FIG. 7a and FIG. 7b illustrate different rotation ranges 50 of the rotatable seat 20 in dependence of the operating position of the steering wheel 22. The rotation range 50 corresponds with a range in which the rotatable seat 20 can be rotated about the first rotation axis 21 without any part of the rotatable seat 20 or the connected two-part armrest 24 colliding with any other part of the cabin 14. When the steering wheel 22 is in the operating position, the steering wheel 22 protrudes more towards the rotatable seat 20. Hence, the rotation range 50 of the rotatable seat 20 is reduced as illustrated in Fig. 7a. When the steering wheel 22 is in the parking position 22', the steering wheel 22 is in a position close to the front window of the cabin 14 being further away from the rotatable seat 20 and the two-part armrest 24. Accordingly, the rotatable seat 20 can be rotated in a counterclockwise direction without risking a collision between the two-part armrest 24 with the steering wheel 22 in the parking position 22'. This results in an enlarged rotation range 50 of the rotatable seat 20 when the steering wheel 22 is in the parking position 22' as illustrated in Fig. 7b. The current position of the steering wheel 22 can be detected by the control unit 4 by a sensor of the sensor system 28, or a switch which is actuated whenever the steering wheel 22 is switched from one position into another position, or by any other suitable means.

The position of the rotatable seat 20 is adjustable in a longitudinal direction F of the work vehicle 2 by means of a guiding element 36. The guiding element 36 is in form of a rail which is located beneath the rotatable seat 20. In an alternative scenario, the guiding element 36 might be located beneath the rotatable seat 20 but above a rotatable disc of the rotatable seat 20 which enables the seat 20 to be rotatable. The rotatable seat 20 comprises a corresponding counterpart which engages with the guiding element 36 to enable a sliding movement along the guiding element 36 in a longitudinal direction. The longitudinal position of the rotatable seat 20 is generally locked and can be unlocked by the operator by the actuation of a lever or any other suitable means to enable a longitudinal adjustment of the rotatable seat 20. The longitudinal position of the rotatable seat 20 is also taken into account by the control unit 4 for determining the rotation range 50. Depending on the longitudinal position of the rotatable seat 20, certain obstacles within the cabin 14 may be closer to the two-part armrest 24 than others. Accordingly, the rotation range 50 of the rotatable seat 20 is affected. An example is illustrated in FIG. 8a and FIG. 8b.

FIG. 8a and FIG. 8b illustrate a scenario in which the rotatable seat 20 is moved to a backward position along the guiding element 36. The longitudinal position of the rotatable seat 20 is taken into account by the control unit 4 and the rotation range 50 is adjusted accordingly. As illustrated, in this scenario the rotation range 50 is smaller when the rotatable seat 20 is in a backward position compared to the position of the rotatable seat 20 in a middle position as illustrated in FIG. 7a and 7b since the two-part armrest 24 cannot rotate as freely as in the middle position due to the proximity of the rear wall of the cabin 14. FIG. 8a shows the maximum rotation range 50 of the rotatable seat 20 in a backward position while the steering wheel 22 is in the operating position. The backward position of the rotatable seat 20 is more suited for a tall operator so he is able to stretch his legs more than when the rotatable seat 20 is in the middle position. FIG. 8b depicts the same scenario but with the steering wheel 22 in the parking position 22'. Accordingly, the maximum rotation range 50 of the rotatable seat 20 is greater when the steering wheel 22 is in the parking position 22' compared to when the steering wheel 22 is in the operating position since the steering wheel 22 in the parking position 22' is closer to the front window of the cabin 14. Furthermore, the rotatable seat 20 is able to rotate together with the two-part armrest 24 beneath the steering wheel 22 due to the increased telescopic adjustment of the length of the steering column when the steering wheel 22 is in the parking position 22'.

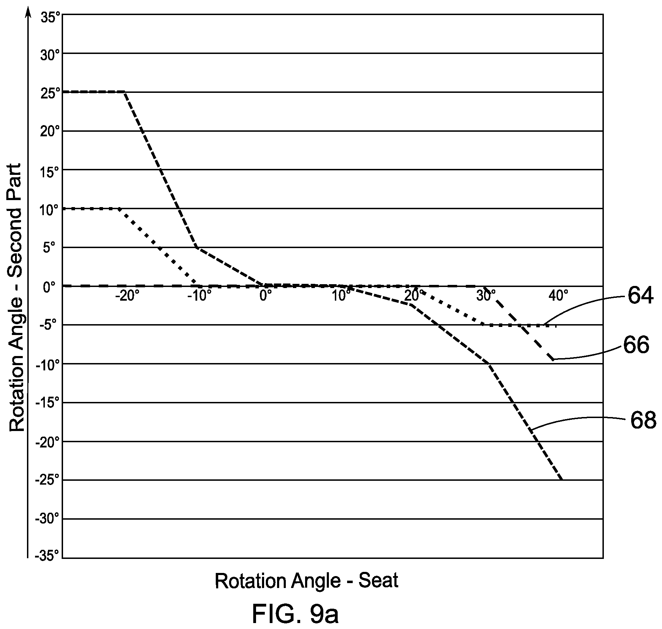

FIG. 9a illustrates motion graphs which display the proportional relationship of movement between the second part 24b of the two-part armrest 24 and the rotation angle of the rotatable seat 22. The movement of the rotatable seat 20 and the second part 24b of the two-part armrest 24 is illustrated in relation to the forward driving direction of the work vehicle 2 indicated by arrow T in FIG. 1 and FIG. 3. At the rotation angle of 0°, the orientation of the rotatable seat 20 aligns with the forward driving direction of the work vehicle 2 as illustrated for example in Fig. 3 and the second part 24b of the two-part armrest 24 aligns with the first part 24a of the two-part armrest 24.

FIG. 9a shows three motion graphs 64, 66, 68 which are saved in the memory 10 of the control unit 4. The control unit 4 can select one of the motion graphs 64, 66, 68 to control the actuator 30 accordingly. Furthermore, the control unit 4 could be used to adjust the motion graphs 64, 66, 68 which are saved in the memory 10. In this scenario the proportional relationship between the movement of the second part 24b of the two-part armrest 24 and the rotatable seat 20 is formed by an electrical connection. However, the proportional relationship could have also been formed mechanically or hydraulically. An electrical connection has the additional feature that the various motion graphs 64, 66, 68 can be created for specific scenarios without the need to physically change the arrangement since a sensor is used to detect the movement of the rotatable seat 20 and the control unit 4 can control the first actuator 30 in form of an electric motor to adjust the second part 24b of the two-part armrest 24 accordingly to the specific circumstances. In a mechanical connection, the attachment point of a Bowden cable would have to be adjusted to adjust the proportional factor of the proportional relationship. In a hydraulic connection, at least one additional hydraulic cylinder needs to be adjusted to adjust the proportional factor of the proportional relationship.

The first motion graph 64 shows a scenario in which the second part 24b of the two-part armrest 24 remains aligned with the first part 24a of the two-part armrest 24 for a range between -10° and 20° degree of rotation of the rotatable seat 20. The proportionality factor in this area would be 0 since no additional movement of the second part 24b of the two-part armrest 24 is induced by the control unit 4 through the first actuator 30. Starting from -10°, the proportionality factor is decreased by the control unit 4 to induce a 10° rotation of the second part 24b in relation to the first part 24a of the two-part armrest 24 over the next 10° degrees of movement when the rotatable seat 20 is rotated from -10° to -20°. The two-part armrest 24 is decoupled from the rotatable seat 20 at -20° degrees and the two-part armrest 24 is not moved while the rotatable seat 20 is rotated further. If the rotatable seat 20 is rotated in a clockwise direction, then the proportionality factor is also decreased slightly from 0 in the range of 20° to 30° to induce a small rotational movement of the second part 24b from 0° to -5°. Accordingly, the rotatable seat 20 is rotated in a clockwise direction and the second part 24b of the two-part armrest 24 is rotated in a counterclockwise direction. At 30° of the rotatable seat 20, the two-part armrest 24 is decoupled from the rotatable seat 20 and remains at the same position when the rotatable seat 20 is rotated further in a clockwise direction.

The second motion graph 66 depicts a scenario in which the rotatable seat 20 can be rotated together with the two-part armrest 24 in a counterclockwise direction when the steering wheel 22 of the work vehicle 2 is in the parking position 22' according to a proportionality factor of 0. The movement in a clockwise direction is limited leading to a decrease in the proportionality factor between 30° and 40° to move the second part 24b of the two-part armrest 24 from 0° to -10° in a counterclockwise direction.

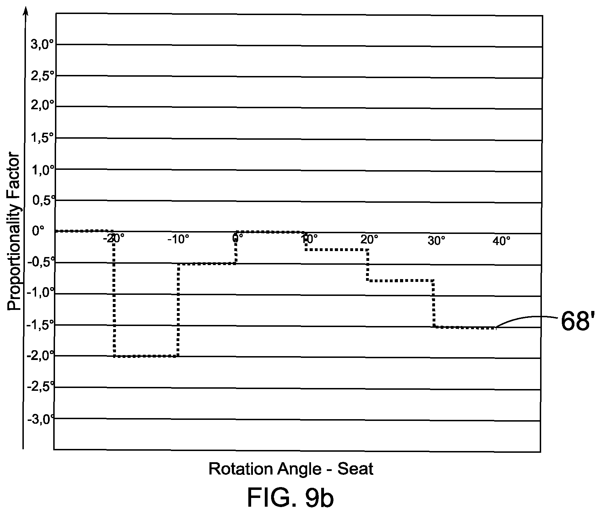

The third motion graph 68 illustrates a scenario in which the second part 24b of the two-part armrest 24 is moved for a wider rotation angle in a counterclockwise direction when the rotatable seat 20 is rotated in a clockwise direction. The proportionality factor is thereby decreased slightly in the beginning at 10° by the control unit 4 and is decreased gradually the further the rotatable seat 20 is rotated. At 40°, the rotation of the rotatable seat 20 is stopped by the second actuator 31. When the rotatable seat 20 is rotated in a counterclockwise direction, then proportionality factor is decreased twice, first to a small level between 0° and -10° and to a second lower level when the rotatable seat 20 is rotated from -10° to -20°. Between 0° and -10°, the second part 24b of the two-part armrest 24 is moved to 5° in a clockwise direction according to the small negative proportionality factor in response to the rotation of the rotatable seat 20 in a counterclockwise direction. Once the proportionality factor is further decreased by the control unit 4, the second part 24b of the two-part armrest 24 is moved rapidly to 25° between -10° to -20° of rotation of the rotatable seat 20 to prevent a collision between the second part 24b of the two-part armrest 24 with the steering wheel 22. At -20°, the two-part armrest 24 is decoupled to allow further rotation of the rotatable seat 20 while the two-part armrest 24 remains in the same place. The adjustments of the proportionality factor by the control unit 4 for the third motion graph 68 is explained in further detail in the following description for FIG. 9b.

Fig. 9b illustrates the changes of the proportionality factor 68' by the control unit 4 for the third motion graph 68. When the rotatable seat 20 is rotated in a counterclockwise direction from 0° degree to -10° then the control unit 4 adjusts the proportionality factor from 0 to -0,5. This results in a small movement in a clockwise direction of the second part 24b of the two-part armrest 24 in relation to a larger rotation of the rotatable seat 20 in a counterclockwise direction. The proportionality factor is decreased further from -0,5 to -2,0 when the rotatable seat 20 is rotated from -10° to -20°. This decrease of the proportionality factor by the control unit 4 leads to an increased rotational movement of the second part 24b of the two-part armrest 24 in a clockwise direction in comparison to the rotation of the rotatable seat 20 which is rotated in a counterclockwise direction. While the rotatable seat 20 is only rotated 10° in a counterclockwise direction, the second part 24b of the two-part armrest 24 is rotated 20° in a clockwise direction in relation to the first part 24a of the two-part armrest 24. When the two-part armrest 24 is decoupled at -20°, the proportionality factor is set to 0 by the control unit 4. In this case rotation of the rotatable seat 20 leads to no additional movement of the second part 24b of the two-part armrest 24 in relation to the first part 24a of the two-part armrest 24. When the rotatable seat 20 is rotated in a clockwise direction from 0° degree to 10° degree, then the control unit 4 sets the proportionality factor to zero. This results in the second part 24b of the two-part armrest 24 continue to be aligned with the first part 24a of the two-part armrest 24 while the rotatable seat 20 is being rotated. At 10°, a small negative proportionality factor of -0,25 is set by the control unit 4 to induce a small counterclockwise movement of the second part 24b of the two-part armrest 24 in relation to the first part 24a of the two-part armrest 24 while the rotatable seat 20 is rotated further in a clockwise direction. When the rotatable seat 20 is rotated further in a clockwise direction and closes in on the side wall of the cabin 14, the proportionality factor is adjusted by the control unit 4 also by decreasing it from -0,25 to -0,75 for when the rotatable seat 20 is within 20° to 30°. The proportionality factor is further decreased to -1,5 when the rotatable seat 20 is being rotated between 30° and 40° before the rotation of the rotatable seat 20 is stopped by the second actuator 31.

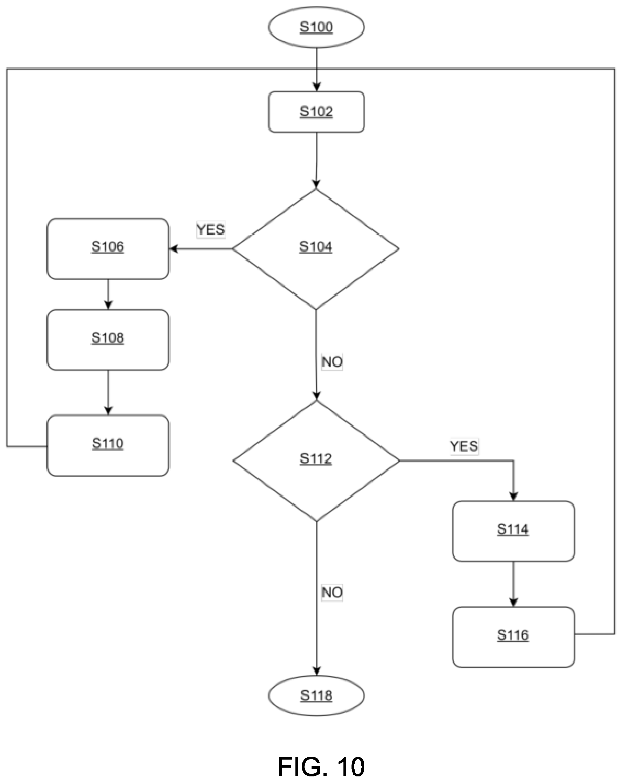

FIG. 10 illustrates a flowchart diagram for a method executable by the control unit 4 to control the first actuator 30 to adjust the second part 24b of the two-part armrest 24 and the second actuator 31 to adjust a stopping mechanism 60 for the rotatable seat 20. The method starts with act S100 and proceeds to act S102.

At act S102, the sensor system 28 which includes the proximity sensor with the sensor area 29 gathers data and sends the data to the control unit 4 which receives the sensor data. Then, the method proceeds to act S104.

At act S104, the control unit 104 analyses the sensor data and determines whether an obstacle 32 is located within the sensor area 29 of the sensor system 28. If an obstacle 32 is located within the sensor area 29, then the method proceeds to act S106. If no obstacle 32 is detected within the sensor area 29, then the method proceeds to act S112.

At act S106, the control unit 4 adjusts the proportionality factor in dependence of the location of the obstacle 32 within the sensor area 29 of the sensor system 28 and the direction of rotation of the rotatable seat 20. If the rotatable seat 20 is rotated in a counterclockwise direction and an obstacle 32 is detected in a counterclockwise direction, then the control unit 4 decreases the proportionality factor until the proportionality factor is negative to move the second part 24b of the two-part armrest 24 in a clockwise direction. If the rotatable seat 20 is rotated in a clockwise direction and an obstacle 32 is detected in a clockwise direction, then the control unit 4 decreases the proportionality factor until the proportionality factor is negative to move the second part 24b of the two-part armrest 24 in a counterclockwise direction. Then, the flowchart diagram proceeds to act S108.

At act S108, the control unit 4 sends out a command signal to the first actuator 30 to induce the movement to the second part 24b of the two-part armrest 24 according to the proportionality factor. Then, the flowchart diagram proceeds to act S110.

At act S110, the first actuator 30 receives the command signal from the control unit 4 and moves the second part 24b of the two-part armrest 24 according to the proportionality factor. Then, the flowchart diagram loops back to act S102.

At act S112, if at act S104 no obstacle 32 is detected within the sensor area 29 of the sensor system 28, the control unit 4 determines based on the received sensor data whether a change of the circumstances within the cabin 14 has been detected. Such a change in circumstances might be an adjustment of the rotatable seat 20 in a longitudinal direction F along the guiding element 36. Alternatively, such a change in circumstances might also be positional change of the steering wheel 22 from the operating position to the parking position 22' (or vice versa). Also, the integration of additional components within the cabin 14 can be taken into account by the control unit 4 as potential obstacles 32. If a change in circumstances is detected within the cabin 14 by the control unit 4, then the method proceeds to act S114. If no change of circumstance is detected within the cabin 14 by the control unit 4, then the method ends with act S118. The method may be restarted again with act S100.

At act S114, the control unit 4 sends out a command signal to a second actuator 31 to adjust a stopping mechanism 60 for a rotatable seat 20 to prevent the rotatable seat 20 from rotating further than the rotation range 50. Then, the method proceeds to act S116.

At act S116, the second actuator 31 receives the command signal and adjusts the stopping mechanism 60 of the rotatable seat 20 accordingly. Then, the method loops back to act S102.

The rotation ranges 50 illustrated in the Figures are not intended to be limiting. They only illustrate an exemplary scenario. The rotatable seat 20 with the two-part armrest 24 may enable an operator of a work vehicle 2 to rotate the rotatable seat 20 for at least 180° in either direction so the operator can operate the work vehicle 2 in a forward direction as well as in a backward direction. In another scenario the operator can rotate the rotatable seat 20 for at least 90° in either direction. In yet another scenario the operator can rotate the rotatable seat 20 for at least 45° in either direction.

All references cited herein are incorporated herein in their entireties. If there is a conflict between definitions herein and in an incorporated reference, the definition herein shall control.

### LISTING OF DRAWING ELEMENTS

| | | | |
|---|---|---|---|
| 2 | Work vehicle | 31 | Second actuator |
| 4 | Control unit | 32 | Obstacle |
| 6 | Interface | 34 | Path |
| 8 | Controller | 36 | Guiding element |
| 10 | Memory | 50 | Rotation range |
| 12 | Chassis | 60 | Stopping mechanism |
| 14 | Cabin | 64 | First motion graph |
| 16 | Pillar | 66 | Second motion graph |
| 18 | Roof | 68 | Third motion graph |
| 20 | Seat | | |
| 21 | First rotation axis | | |
| 22 | Steering wheel | | |
| 22' | Parking position | | |
| 24 | Armrest | | |
| 24a | First part | | |
| 24b | Second part | | |
| 24c | Connection element | | |
| 25 | Second rotation axis | | |
| 26 | Human machine interface (HMI) | | |
| 28 | Sensor system | | |
| 29 | Sensor area | | |
| 30 | First actuator | | |

## Claims

1. An operator station for a work vehicle (2) comprising,
a two-part armrest (24) parted in a first part (24a) and a second part (24b);
wherein
the first part (24a) is rotatable about a first rotation axis (21); and
the second part (24b) is relatively moveable to the first part (24a) in dependence of the rotation of the first part (24a) about the first rotation axis (21).

2. The operator station for a work vehicle (2) according to claim 1,
wherein the second part (24b) is rotatable about a second rotation axis (25) being different to the first rotation axis (21).

3. The operator station for a work vehicle (2) according to claim 1 or 2,
wherein the second part (24b) is slidable along a path (34).

4. The operator station for a work vehicle (2) according to any one of the claims 1 to 3, comprising a rotatable seat (20), wherein the rotatable seat (20) is rotatable about the first rotation axis (21) within a rotation range (50), in which the rotatable seat (20) can be rotated without any part of the rotatable seat (20) or the two-part armrest (24) colliding with an obstacle (32).

5. The operator station for a work vehicle (2) according to claim 4, comprising an adjustable steering wheel (22) moveable between an operating position and a parking position, wherein the rotation range (50) of the rotatable seat (20) with the two-part armrest (24) is greater when the steering wheel (22) is in the parking position rather than in the operating position.

6. The operator station for a work vehicle (2) according to any one of the preceding claims 4 to 5, wherein a position of the rotatable seat (20) is adjustable in a longitudinal direction (F) of the work vehicle (2), wherein the rotation range (50) of the rotatable seat (20) with the two-part armrest (24) is dependent on the longitudinal position of the rotatable seat (20).

7. The operator station for a work vehicle (2) according to any one of the preceding claims 4 to 6,
wherein the second part (24b) of the two-part armrest (24) is moveable in relation to the first part (24a) of the two-part armrest (24) in dependence of the rotation of the rotatable seat (20).

8. The operator station for a work vehicle (2) according to claim 7, wherein the second part (24b) of the two-part armrest (24) is configured to move in a direction different to the direction of the rotation of the rotatable seat (20) when the rotatable seat (20) is rotated.

9. The operator station for a work vehicle (2) according to claim 8, wherein the different direction is contrary to the direction of rotation of the rotatable seat (20).

10. The operator station for a work vehicle (2) according to any one of the preceding claims, comprising a control unit (4) to control a first actuator (30); wherein
the first actuator (30) is configured to move the second part (24b) of the two-part armrest (24).

11. The operator station for a work vehicle (2) according to claim 10, wherein a movement of the second part (24b) of the two-part armrest (24) is dependable on a movement of the rotatable seat (20) in accordance with a proportional relationship, wherein a proportionality factor of the proportional relationship is adjustable by the control unit (4).

12. The operator station for a work vehicle (2) according to claim 11, wherein the control unit (4) is configured to
- receive a signal from a sensor system (28); and
- determine the proportionality factor to prevent a collision between the second part (24b) of the two-part armrest (24) and the obstacle (32) based on the signal.

13. The operator station for a work vehicle (2) according to claim 12, wherein the sensor system (28) comprises a proximity sensor (28a), which is configured to detect any obstacle (32) within a sensor area (29) of the proximity sensor (28a), wherein the control unit (4) is configured to adjust the proportionality factor of the proportional relationship of the second part (24b) of the two-part armrest (24) based on the detection of any obstacle (32) within the sensor area (29) to prevent a collision between the second part (24b) of the two-part armrest (24) and the obstacle (32).

14. The operator station for a work vehicle (2) according to any one of the preceding claims 8 to 13, wherein the control unit (4) is configured to control a second actuator (31) to adjust the rotation range (50) of the rotatable seat (20).

15. The operator station for a work vehicle (2) according to claim 14, wherein the second actuator (31) is configured to adjust a stopping mechanism (60) to limit the rotation range (50) of the rotatable seat (20) in either direction of the first rotation axis (21).
